# EUROPÄISCHE PATENTSCHRIFT

(11) **EP 3 401 454 B1**
(45) Veröffentlichungstag und Bekanntmachung des Hinweises auf die Patenterteilung: **20.04.2022**
(21) Anmeldenummer: 17000788.4
(22) Anmeldetag: 08.05.2017
(51) Int. Cl.: E04B 1/41

(54) **BEFESTIGUNGSSCHIENE UND BETONBAUTEIL MIT EINER BEFESTIGUNGSSCHIENE**
FIXING RAIL AND CONCRETE COMPONENT WITH A FIXING RAIL
RAIL DE FIXATION ET COMPOSANT BÉTON COMPRENANT UN RAIL DE FIXATION

(43) Veröffentlichungstag der Anmeldung: 14.11.2018
(73) Patentinhaber: Leviat GmbH, 40764 Langenfeld (DE)
(72) Erfinder: MAGIERA, Andrea, 40699 Erkrath (DE); GEUS, Jörg, 50226 Frechen (DE); JUSCHKAT, Bastian, 40789 Monheim (DE); KALTHOFF, Thomas, 45475 Mülheim / Ruhr (DE); PLAMPER-HELLWIG, Dieter, 42781 Haan (DE); ALBARTUS, Dirk, 44795 Bochum (DE); AXT, Kerstin, 42781 Haan (DE); HÄUSLER, Frank, 40217 Düsseldorf (DE); SAIBEL, Vadim, 40885 Ratingen (DE)
(74) Vertreter: Reinhardt, Annette

(56) Entgegenhaltungen:
- EP-A1- 3 081 706
- DE-A1- 19 725 882
- US-A- 4 130 977

## Beschreibung

Die Erfindung betrifft eine Befestigungsschiene zur Einbettung in ein Betonbauteil der im Oberbegriff des Anspruchs 1 angegebenen Gattung, ein Betonbauteil mit einer Befestigungsschiene und ein Verfahren zur Herstellung einer Befestigungsschiene.

Aus der DE 100 14 977 A1 ist eine Befestigungsschiene, nämlich eine Profilschiene zum Einbetonieren in ein Betonbauteil, bekannt. Um die Verankerung der Schiene im umgebenden Beton zu verbessern, besitzen die Schienenlängsseiten der Profilschiene Mittel zur formschlüssigen Verbindung mit dem Betonbauteil. Die Schiene kann hierzu an ihren Schienenlängsseiten mit einem Hinterschnitt ausgebildet sein.

Die DE 197 25 882 A2 offenbart eine Ankerschiene, mit deren Halteschenkeln Verankerungsprofilierungen verbunden sind. Die Verankerungsprofilierungen erstrecken sich in Schienenlängsrichtung in Verlängerung der Schienenlängsseiten. Aus der EP 3 081 706 A1 geht eine Ankerschiene hervor, die an ihren Schienenlängsseiten eine Profilierung trägt.

US 4 130 977 offenbart eine Befestigungsschiene nach dem Oberbegriff des Anspruchs 1.

Der Erfindung liegt die Aufgabe zugrunde, eine Befestigungsschiene zur Einbettung in ein Betonbauteil der gattungsgemäßen Art zu schaffen, die eine verbesserte Fixierung im umgebenden Beton ermöglicht. Eine weitere Aufgabe der Erfindung liegt darin, ein Betonbauteil mit einer Befestigungsschiene anzugeben, bei dem über die Befestigungsschiene hohe Kräfte in den Beton eingeleitet werden können. Eine weitere Aufgabe der Erfindung besteht darin, ein Verfahren zur Herstellung einer Befestigungsschiene anzugeben.

Diese Aufgabe wird bezüglich der Befestigungsschiene durch eine Befestigungsschiene mit den Merkmalen des Anspruchs 1 gelöst. Bezüglich des Betonbauteils wird die Aufgabe durch ein Betonbauteil mit den Merkmalen des Anspruchs 12 gelöst. Bezüglich des Verfahrens zur Herstellung einer Befestigungsschiene wird die Aufgabe durch ein Verfahren mit den Merkmalen des Anspruchs 14 gelöst.

Um die Verankerung der Befestigungsschiene im Betonbauteil zu verbessern, ist vorgesehen, dass die Außenseite der Befestigungsschiene, die zum Kontakt mit dem Beton des Betonbauteils vorgesehen ist, mindestens teilweise mit einer Profilierung versehen ist. Die Außenseiten der Schienenlippen sind nicht zum Kontakt mit dem Beton des Betonbauteils vorgesehen und bilden deshalb keinen Teil der Außenfläche. Es hat sich gezeigt, dass durch die Profilierung der Außenfläche insbesondere in Schienenlängsrichtung höhere Kräfte übertragbar sind. Durch den Hinterschnitt der Befestigungsschiene können Kräfte senkrecht zur Oberfläche des Betonbauteils, in das die Befestigungsschiene eingebettet ist, gut aufgenommen werden, so dass sich insgesamt eine hohe Tragfähigkeit auch ohne Anker am Schienenrücken erreichen lässt. Ein Hinterschnitt bedeutet dabei eine Verbreiterung an der Außenseite der Befestigungsschiene in Richtung vom Schienenrücken zu den Schienenlippen. Der Hinterschnitt bewirkt, dass die Befestigungsschiene senkrecht zur Ebene der Schienenlippen formschlüssig im umgebenden Beton gehalten ist.

Dadurch, dass die Befestigungsschiene ankerlos ausgebildet ist, also am Schienenrücken keine Anker besitzt, kann die Befestigungsschiene unabhängig von einer Bewehrung des Betonbauteils eingebaut werden. Übliche Anker ragen in die Bewehrung eines Betonbauteils hinein, so dass die Lage der Befestigungsschienen auf die Lage der Bewehrung abzustimmen ist. Es hat sich gezeigt, dass durch die Kombination einer mindestens teilweisen Profilierung der zum Kontakt mit dem Beton vorgesehenen Außenfläche der Befestigungsschiene und einem Hinterschnitt vom Schienenrücken in Richtung auf die Außenseite der Schienenlippen eine sehr gute Verankerung erreicht wird, so dass Anker am Schienenrücken entfallen können und dennoch hohe Kräfte in die Befestigungsschiene eingeleitet werden können.

Die erfindungsgemäße Befestigungsschiene ist auch in sehr dünnen Bauteilen anwendbar. Aufgrund der ankerlosen Gestaltung kann die Befestigungsschiene auch in vergleichsweise dünne Betonbauteile vollständig eingebettet werden, so dass die Befestigungsschiene bündig zur Oberseite des Betonbauteils liegt. Die Außenfläche ist vorteilhaft über die gesamte Länge der Befestigungsschiene und insbesondere über einen Großteil, bevorzugt über den gesamten Umfang mit der Profilierung versehen. Dadurch erfolgt die Lastübertragung in das Betonbauteil gleichmäßig über die gesamte Länge der Befestigungsschiene und nicht wie bei herkömmlichen, in einem vorgegebenen Abstand angeordneten Ankern, nur punktuell.

Die Profilierung kann in einem Walzverfahren, insbesondere in einem Kaltwalzverfahren, erfolgen. Zusätzliche Fertigungsschritte wie beispielsweise ein Stanzvorgang wie bei der Einbringung von Durchbrüchen im Schienenrücken und/ oder den Schienenlängsseiten sind nicht notwendig. Bei Rissbildung im Beton wird die Tragfähigkeit nicht wesentlich abgemindert, da die Befestigungsschiene über ihre gesamte Länge über die Profilierung und den Hinterschnitt im Betonbauteil gehalten ist. Die Profilierung erstreckt sich vorteilhaft bis zu den quer zur Schienenlängsrichtung ausgerichteten Stirnseiten der Befestigungsschiene. Dadurch können auch in den Randbereichen der Befestigungsschiene, also an den Enden der Befestigungsschiene, bereits vergleichsweise hohe Lasten eingebracht werden. Die Einhaltung großer Randabstände wie bei Befestigungsschienen mit Anker ist nicht notwendig. Aufgrund der durchgehenden Profilierung ist die Befestigungsschiene beliebig schneidbar und kürzbar. Der Lageraufwand für Fixlängen, wie er bei Befestigungsschienen mit Anker gegeben ist, kann dadurch entfallen.

Vorteilhaft beträgt die Tiefe der Profilierung höchstens 70 % der Wandstärke der Befestigungsschiene. In vorteilhafter Gestaltung beträgt die Tiefe der Profilierung höchstens 50 %, insbesondere höchstens 40 % der Wandstärke der Befestigungsschiene. Eine Profilierung mit vergleichsweise geringer Tiefe kann einfach in einem Kaltwalzverfahren hergestellt werden. Es hat sich gezeigt, dass sich bereits bei einer Profilierungstiefe von höchstens 70 %, insbesondere von höchstens 50 %, vorteilhaft von höchstens 40 %, eine gute Verankerung im umgebenden Beton erreichen lässt. Die Profilierung weist dabei vorteilhaft keine Durchbrüche auf. Dadurch wird bei der Herstellung kein Stanzverfahren zur Erzeugung von Durchbrüchen benötigt. Dadurch wird die Herstellung vereinfacht.

Die Profilierung wird vorteilhaft durch eine Vielzahl von Eindrückungen in der Außenfläche gebildet. Die Eindrückungen sind vorteilhaft voneinander beabstandete, einzelne Eindrückungen mit definierter Geometrie. Es kann jedoch auch vorgesehen sein, dass die Profilierung durch eine unregelmäßige Geometrie, insbesondere durch eine erhöhte Rauigkeit der Außenseite des Schienenrückens erreicht wird. Die der Außenfläche abgewandte Innenfläche des Schienenrückens ist vorteilhaft als ebene Fläche ohne Profilierung ausgebildet. An der Innenfläche ist dadurch keine Bearbeitung bei der Herstellung der Schiene erforderlich. Vorteilhaft bildet sich die Profilierung der Außenfläche nicht an der Innenfläche der Befestigungsschiene ab. Die Innenfläche setzt sich dabei aus der Innenseite des Schienenrückens und den Innenseiten der Schienenlängsseiten zusammen.

Der Mittenabstand benachbarter Eindrückungen ist vorteilhaft größer als die Tiefe der Eindrückungen. In bevorzugter Gestaltung beträgt das Verhältnis des Mittenabstands benachbarter Eindrückungen zur Tiefe der Eindrückungen von 2 bis 6. Vorteilhaft weisen alle Eindrückungen die gleiche Tiefe auf. Auch Eindrückungen mit unterschiedlicher Tiefe können jedoch vorteilhaft sein. Bei Eindrückungen mit unterschiedlicher Tiefe ist die Tiefe der Eindrückungen die mittlere Tiefe der Eindrückungen.

Der Schienenrücken ist an seiner den Schienenlippen abgewandten Außenseite mit einer Profilierung versehen. In vorteilhafter Gestaltung sind auch die Schienenlängsseiten an ihren Außenseiten mit einer Profilierung versehen. Durch die Profilierung der Schienenlängsseiten und des Schienenrückens lässt sich eine gute Verankerung im umgebenden Beton erreichen. Es kann auch vorteilhaft sein, dass nur die Schienenlängsseiten oder nur der Schienenrücken eine Profilierung an der Außenseite trägt. Auch einen teilweise Profilierung von Schienenlängsseiten und/oder Schienenrücken kann vorteilhaft sein. Die Profilierung an den Außenseiten der

Schienenlängsseiten verbessert dabei sowohl die Kraftübertragung in Schienenlängsrichtung als auch die Kraftübertragung senkrecht zur Oberseite des Betonbauteils und unterstützt hierdurch die Wirkung des Hinterschnitts.

In bevorzugter Gestaltung erstreckt sich die Profilierung der Befestigungsschiene durchgehend über die Außenseite des Schienenrückens und die Außenseiten der Schienenlängsseiten. Bei den Schienenlippen ist vorteilhaft keine Profilierung an der Außenseite vorgesehen, so dass sich ein ansprechendes, glattes Äußeres der Befestigungsschiene im Einbauzustand ergibt. Es kann jedoch auch vorteilhaft sein, auch die Außenseiten der Schienenlippen mit einer Profilierung zu versehen, so dass auch die von einer Befestigungsschraube auf die Befestigungsschiene übertragbare Kraft in Schienenlängsrichtung erhöht wird. Die Profilierung an den Außenseiten der Schienenlippen kann dabei gleich ausgeführt sein wie die Profilierung der Außenseiten des Schienenrückens und der Außenseiten der Schienenlängsseiten. Auch eine andere Profilierung der Außenseiten der Schienenlippen kann jedoch vorteilhaft sein.

Vorteilhaft trägt die Befestigungsschiene an den Innenseiten der Schienenlippen eine zweite Profilierung. Die Befestigungsschiene ist vorteilhaft dazu vorgesehen, dass ein Befestigungselement, insbesondere der Kopf einer Befestigungsschraube, in den Schieneninnenraum eingeführt und dort gegen die Innenseiten der Schienenlippen gedrückt wird. Dies erfolgt vorteilhaft durch eine an der Außenseite des Befestigungsmittels, insbesondere der Schraube, aufgeschraubte Mutter. Die zweite Profilierung erhöht die Reibung an der Innenseite der Schienenlippen der Befestigungsschiene, so dass auch die von dem Befestigungselement auf die Befestigungsschiene übertragbare Kraft, insbesondere die übertragbare Kraft in Schienenlängsrichtung, deutlich erhöht wird. Die Profilierung an den Innenseiten der Schienenlippen kann durch eine Verzahnung, eine Aufrauung oder eine Oberflächenstrukturierung, beispielsweise nach Art einer Rändelung oder dergleichen, erfolgen.

Der Hinterschnitt wird durch mindestens eine Schienenlängsseite gebildet. Der Hinterschnitt wird dadurch gebildet, dass die parallel zur Außenseite der Schienenlippen und senkrecht zur Schienenlängsrichtung gemessene Breite der Befestigungsschiene in zumindest einem Abschnitt vom Schienenrücken in Richtung auf die Außenseite der Schienenlippen abnimmt. Für die Bildung des Hinterschnitts werden dadurch keine zusätzlichen Elemente benötigt. Es kann jedoch auch vorgesehen sein, dass zusätzliche Elemente wie beispielsweise in Schienenlängsrichtung verlaufende Rippen, Stege oder dergleichen zur Bildung des Hinterschnitts vorgesehen sind. In besonders bevorzugter Gestaltung ist der Querschnitt der Befestigungsschiene näherungsweise trapezförmig. Die Schienenlängsseiten sind vorteilhaft zumindest in dem Abschnitt, in dem der Hinterschnitt gebildet ist, vom Schienenrücken in Richtung auf die Schienenlippen aufeinander zu geneigt.

Die größte Breite der Befestigungsschiene in dem Abschnitt, in dem der Hinterschnitt gebildet ist, beträgt vorteilhaft mindestens das 1,1fache, insbesondere mindestens das 1,2fache der geringsten Breite der Schiene. Die größte Breite beträgt dabei insbesondere weniger als das 2fache, insbesondere weniger als das 1,6fache der geringsten Breite. In bevorzugter Gestaltung ist die geringste Breite der Befestigungsschiene benachbart zu den Schienenlippen gegeben und die größte Breite benachbart zum Schienenrücken. Dadurch kann näherungsweise die gesamte Höhe der Befestigungsschiene zur Bildung des Hinterschnitts genutzt werden. Vorteilhaft nimmt die Breite der Befestigungsschiene vom Schienenrücken zu den Schienenlippen kontinuierlich ab. Die Schienenlängsseiten können dabei gerade oder konvex oder konkav gebogen verlaufen. Auch eine andere Formgebung der Schienenlängsseiten kann vorteilhaft sein.

Vorteilhaft beträgt die Gesamtbreite der Befestigungsschiene das 1,4fache bis 1,8fache der Höhe der Befestigungsschiene. Durch die vergleichsweise große Höhe der Befestigungsschiene kann bei vorgegebener Breite der Schienenlippen und des Schienenrückens ein vergleichsweiser großer Abschnitt mit Hinterschnitt gebildet werden, wodurch sich eine gute Verankerung der Befestigungsschiene ergibt.

In vorteilhafter Gestaltung wird die Befestigungsschiene durch ein einteiliges gebogenes Blech gebildet. Zusätzliche Elemente wie beispielsweise Anker oder dergleichen sind demnach nicht an der Befestigungsschiene vorgesehen. Die Wandstärke der Befestigungsschiene ist vorteilhaft vergleichsweise groß und beträgt zumindest am Schienenrücken von 1,2 mm bis 3,0 mm. Bevorzugt ist die Wandstärke der Befestigungsschiene bis auf die durch die Profilierung gebildeten Vertiefungen oder Erhöhungen näherungsweise konstant. Die Wandstärke der Befestigungsschiene beträgt vorteilhaft an den Schienenlängsseiten und an den Schienenlippen 1,2 mm bis 3,0 mm. Das Verhältnis der Wandstärke der Befestigungsschiene zur Gesamtbreite der Befestigungsschiene beträgt vorteilhaft von 0,03 bis 0,08. Die Wandstärke ist demnach im Vergleich zur Gesamtbreite der Befestigungsschiene vergleichsweise groß. Für übliche Verwahrkästen oder dergleichen beträgt das Verhältnis von Wandstärke zu Gesamtbreite in der Größenordnung von Tausendsteln. Die Wandstärke, also die Blechdicke, ist bei Verwahrkästen oder dergleichen demnach deutlich geringer als bei der vorliegenden Befestigungsschiene.

Für ein Betonbauteil mit einer Befestigungsschiene ist vorgesehen, dass die Befestigungsschiene in das Betonbauteil eingebettet ist und dass die Außenseite der Schienenlippen bündig zur Oberfläche des Betonbauteils liegt. Die Befestigungsschiene ist demnach in dem Betonbauteil einbetoniert und dadurch in dem Betonbauteil gehalten. Zusätzliche Anker oder Befestigungsmittel zur Fixierung der Befestigungsschiene in dem Betonbauteil sind vorteilhaft nicht vorgesehen. Das Betonbauteil besitzt insbesondere eine Bewehrung. Der Abstand der Bewehrung zur Oberfläche des Betonbauteils ist dabei vorteilhaft größer als die Höhe der Befestigungsschiene. Dadurch kann die Befestigungsschiene unabhängig von der Bewehrung in dem Betonbauteil angeordnet und fixiert werden.

Die Befestigungsschiene ist vorteilhaft in einem Walzerfahren, insbesondere in einem Kaltwalzverfahren hergestellt. Für ein Verfahren zur Herstellung einer Befestigungsschiene aus einem Blech ist vorgesehen, dass eine Profilierung in zumindest einem Mittelbereich einer Oberseite des Blechs eingebracht wird. Nach dem Einbringen der Profilierung wird das profilierte Blech umgeformt, insbesondere in einem Kaltwalzverfahren. Bei der Umformung des Blechs werden der Schienenrücken, die Schienenlängsseiten und die Schienenlippen der Befestigungsschiene gebildet. Das Blech ist dabei so angeordnet, dass der Schienenrücken mindestens teilweise durch den Mittelbereich des Blechs gebildet ist. Die Oberseite des Blechs bildet dabei die Außenseite des Schienenrückens der Befestigungsschiene. Die Profilierung wird vorteilhaft nicht im Kaltwalzverfahren während der Umformung des Blechs hergestellt, sondern vor der Umformung des Blechs. Das Blech ist insbesondere Bandmaterial, das der Anlage zum Kaltwalzen bereits in profiliertem Zustand zugeführt wird.

Vorteilhaft wird vor dem Umformen des Blechs eine zweite Profilierung in Randbereichen des Blechs an einer der Oberseite der abgewandten Unterseite hergestellt. Die Randbereiche bilden nach der Umformung vorteilhaft die Schienenlippen. Die Profilierung an der Oberseite des Blechs und die zweite Profilierung an der Unterseite können dabei im gleichen Verfahrensschritt oder in beliebiger Reihenfolge nacheinander hergestellt werden.

Ein Ausführungsbeispiel der Erfindung wird im Folgenden anhand der Zeichnung erläutert. Es zeigen:
- Fig. 1 und 2: perspektivische Darstellungen einer Befestigungsschiene,
- Fig. 3: eine ausschnittsweise vergrößerte Schnittdarstellung durch den Schienenrücken der Befestigungsschiene,
- Fig. 4: eine vergrößerte ausschnittsweise Draufsicht auf den Schienenrücken der Befestigungsschiene,
- Fig. 5: einen Blechzuschnitt nach der Einbringung von Profilierungen und vor der Umformung zu einer Befestigungsschiene,
- Fig. 6: eine schematische Schnittdarstellung durch ein Betonbauteil mit darin eingebetteter Befestigungsschiene.

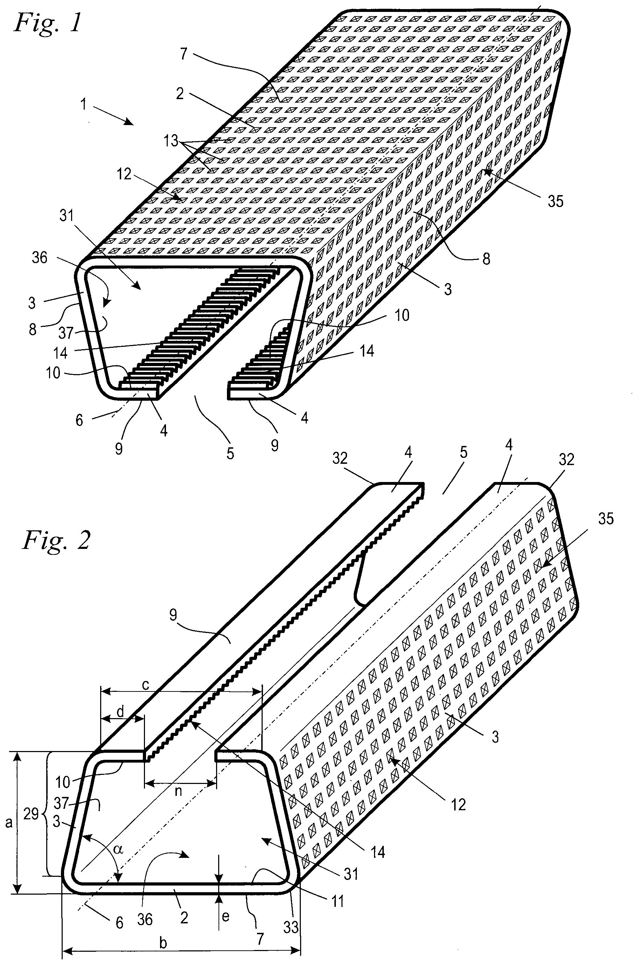

Fig. 1 zeigt eine perspektivische Darstellung einer Befestigungsschiene 1, die zur Einbettung in ein Betonbauteil vorgesehen ist. An der Befestigungsschiene 1 können Gegenstände wie Rohre, Leitungen, Fassadenanker oder dergleichen befestigt werden, ohne dass Bohrungen und Dübel in das Betonbauteil eingebracht werden müssen. Die Befestigungsschiene 1 besitzt einen Schieneninnenraum 31, der über einen Schlitz 5 zur Umgebung offen ist. Durch den Schlitz 5 kann ein Befestigungsmittel wie beispielsweise ein Schraubbolzen mit einem geeigneten Kopf geführt und verschraubt werden. Der Schraubbolzen stützt sich dabei an beidseitig des Schlitzes 5 verlaufenden Schienenlippen 4 ab, die vorteilhaft bündig mit der Oberfläche des Betonbauteils angeordnet sind.

Die Befestigungsschiene 1 besitzt einen Schienenrücken 2, an den beidseitig Schienenlängsseiten 3 anschließen. Im Ausführungsbeispiel ist der Schienenrücken 2 eben ausgebildet und verläuft sowohl in Schienenlängsrichtung 6 als auch in Querrichtung der Befestigungsschiene 1 parallel zu den Schienenlippen 4. Auch eine andere, beispielsweise eine gewölbte Form des Schienenrückens 2 kann jedoch vorteilhaft sein. Der Schienenrücken 2 und die Schienenlängsseiten 3 verlaufen in einer Schienenlängsrichtung 6. An den dem Schienenrücken 2 abgewandten Seiten schließen an die Schienenlängsseiten 3 die Schienenlippen 4 an, die zwischen sich den Schlitz 5 begrenzen. Im Ausführungsbeispiel ist der Querschnitt der Befestigungsschiene 1 näherungsweise trapezförmig. Auch ein anderer Querschnitt kann jedoch vorteilhaft sein. Der Schienenrücken 2 und die Schienenlängsseiten 3 sind ebenso wie die Schienenlippen 4 eben ausgebildet und über abgerundete Kanten miteinander verbunden. Die Rundungen 32 und 33 (Fig. 2) der Kanten ergeben sich durch den im Herstellprozess herstellbaren Biegeradius.

Der Schienenrücken 2 besitzt eine den Schienenlippen 4 abgewandt liegende Außenseite 7 Wie Fig. 1 auch zeigt, besitzen die Schienenlängsseiten 3 Außenseiten 8. Der Schienenrücken 2, die Schienenlängsseiten 3 und die Schienenlippen 4 begrenzen den Schieneninnenraum 31. Die Außenseiten 8 der Schienenlängsseiten 3 liegen dem Schieneninnenraum 31 abgewandt. Die Außenseite 7 des Schienenrückens 2 und die Außenseiten 8 der Schienenlängsseiten 3 bilden eine Außenfläche 35. Die Außenfläche 35 ist im Einbauzustand zum Kontakt mit dem umgebenden Beton vorgesehen. Um die Verankerung im umgebenden Beton zu verbessern, trägt die Außenfläche 35 eine Profilierung 12. Die Profilierung 12 ist durch eine Vielzahl von Eindrückungen 13 gebildet. Im Ausführungsbeispiel sind die Eindrückungen 13 gleichmäßig und in konstantem Abstand zueinander in Schienenlängsrichtung 6 und quer zur Schienenlängsrichtung 6 angeordnet, so dass sich ein regelmäßiges Raster ergibt. Alle Eindrückungen 13 besitzen die gleiche Geometrie. Die Profilierung 12 ist durchgehend über die gesamte Außenseite 7 des Schienenrückens 2 und die Außenseiten 8 der Schienenlängsseiten 3 angeordnet und erstreckt sich in Schienenlängsrichtung 6 bis zu quer zur Schienenlängsrichtung 6 verlaufenden Stirnseiten 35 der Befestigungsschiene 1.

Die Schienenlippen 4 besitzen eine Außenseite 9, die dem Schieneninnenraum 31 abgewandt liegt. Die Schienenlippen 4 besitzen außerdem eine dem Schieneninnenraum 31 zugewandte Innenseite 10, an der eine zweite Profilierung 14 angeordnet ist. Im Ausführungsbeispiel ist die zweite Profilierung 14 als Verzahnung ausgebildet. Die zweite Profilierung 14 ist durch eine Vielzahl von in Schienenlängsrichtung 6 aufeinanderfolgend angeordneten, quer zur Schienenlängsrichtung 6 verlaufenden Zähnen gebildet.

Wie Fig. 2 zeigt, ist die Außenseite 9 der Schienenlippen 4 frei von einer Profilierung und als glatte, ebene Außenseite ausgebildet. Die Profilierung 12 der Schienenlängsseiten 3 erstreckt sich bis an eine Rundung 32, an der die Schienenlängsseiten 3 in die Schienenlippen 4 übergehen. Es kann jedoch auch eine Profilierung an den Außenseiten 9 der Schienenlippen 4 vorgesehen sein.

Wie auch Fig. 2 auch zeigt, besitzen die Schienenlippen 4 eine quer zum Schlitz 5 und senkrecht zur Schienenlängsrichtung 6 gemessene Breite d. Der Schlitz 5 besitzt eine in gleicher Richtung gemessene Breite n. Die Befestigungsschiene 1 besitzt an den Schienenlippen 4 eine Breite c, die die kleinste Breite der Befestigungsschiene 1 ist. Die Breite c entspricht der Summe der Breiten d beider Schienenlippen 4 zuzüglich der Breite n des Schlitzes 5. Die Schienenlängsseiten 3 sind zum Schienenrücken 2 um einen Winkel α geneigt, der von 70° bis 85° beträgt.

Dadurch verbreitert sich die Befestigungsschiene 1 von den Schienenlippen 4 in Richtung auf den Schienenrücken 2.

Die Befestigungsschiene 1 besitzt an den Schienenlängsseiten 3 eine größte Breite b. Die Breite der Befestigungsschiene 1 nimmt im Ausführungsbespiel an den Schienenlängsseiten 3 kontinuierlich von der größten Breite b ab. Die kleinste Breite c ist an den Schienenlippen 4 am Übergang der Schienenlippen 4 in die Rundung 32 gemessen. Die größte Breite b ist dabei am Übergang der Schienenlängsseiten 3 in eine Rundung 33 gemessen. Mit der Rundung 33 gehen die Schienenlängsseiten 3 in den Schienenrücken 2 über. Die Schienenlängsseiten 3 verlaufen im Ausführungsbeispiel zwischen der Rundung 32 und der Rundung 33 eben.

Die Befestigungsschiene 1 besitzt einen Abschnitt 29, in dem die Befestigungsschiene 1 einen Hinterschnitt bildet. Die Breite der Befestigungsschiene nimmt in dem Abschnitt 29 von der größten Breite b bis zur Breite c an den Schienenlippen 4 ab. Die größte Breite b der Befestigungsschiene 1 beträgt in dem Abschnitt 29 dabei mindestens das 1,1 fache, insbesondere mindestens das l,2fache der geringsten Breite c.

Die Befestigungsschiene 1 besitzt eine senkrecht zur Außenseite 9 der Schienenlippen 4 gemessene Höhe a. Im Ausführungsbeispiel entspricht die Breite b der Gesamtbreite der Befestigungsschiene 1. Die Gesamtbreite b der Befestigungsschiene 1 ist vorteilhaft größer als die Höhe a der Befestigungsschiene 1. Vorteilhaft beträgt die Gesamtbreite b der Befestigungsschiene 1 weniger als das Doppelte der Höhe a. Vorteilhaft beträgt die Gesamtbreite b der Befestigungsschiene 1 das 1,4fache bis 1,8fache, insbesondere das 1,5fache bis 1,7fache der Höhe a. Dadurch wird ein ausreichender Hinterschnitt an den Schienenlängsseiten 3 bei vergleichsweise großem Winkel α erreicht. Durch die nicht allzu große Höhe a der Befestigungsschiene 1 ist eine Platzierung der Befestigungsschiene 1 unabhängig von einer in einem Betonbauteil anzuordnenden Bewehrung auf einfache Weise möglich.

Die Befestigungsschiene 1 besitzt eine Wandstärke e. Die Wandstärke e ist am Schienenrücken 2 gemessen. Vorteilhaft ist die Wandstärke e an den Schienenlängsseiten 3 und an den Schienenlippen 4 gleich groß wie am Schienenrücken 2. Die Wandstärke e ist - mit Ausnahme der Eindrückungen 13 und der Erhöhungen der zweiten Profilierung 14 - konstant. Die Wandstärke e der Befestigungsschiene 1 beträgt vorteilhaft von 1,2 mm bis 3,0 mm. Dadurch wird eine ausreichende große Stabilität der Befestigungsschiene 1 erreicht, so dass große Kräfte in die Befestigungsschiene 1 eingeleitet werden können.

Wie Fig. 2 auch zeigt, besitzt der Schienenrücken 2 eine Innenseite 11, die dem Schieneninnenraum 31 zugewandt liegt. Die Innenseite 11 des Schienenrückens 2 ist glatt und eben und ohne Profilierung oder Struktur ausgebildet. Die Innenseite 11 des Schienenrückens 2 und Innenseiten 37 der Schienenlängsseiten 3 bilden eine Innenfläche 36 der Befestigungsschiene, die der Außenseite 35 abgewandt liegt. Die Innenfläche 36 und die Außenfläche 35 sind gegenüberliegende Seiten des gleichen Abschnitts des Blechs, durch das die Befestigungsschiene 1 gebildet ist. Der Schienenrücken 2 weist ebenso wie die Schienenlängsseiten 3 und die Schienenlippen 4 keine Durchbrüche auf, die sich über die gesamte Wandstärke e erstrecken. Auch die Schienenlängsseiten 3 und die Schienenlippen 4 besitzen keine Durchbrüche, die den Schieneninnenraum 31 mit der Umgebung an der Außenseite 8 oder 9 verbinden. Der Schieneninnenraum 31 ist nur über den Schlitz 5 und die Stirnseiten 35 der Befestigungsschiene 1 mit der Umgebung verbunden.

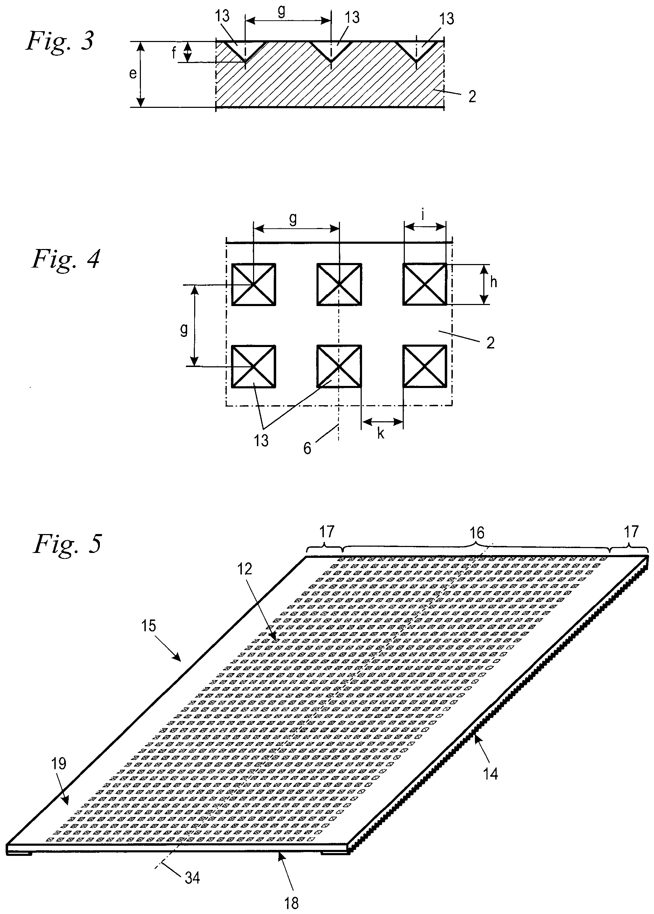

Fig. 3 zeigt die Gestaltung der Eindrückungen 13 der Profilierung 12 im Einzelnen. Wie Fig. 3 zeigt, besitzen die Eindrückungen 13 einen dreieckigen Querschnitt. Wie Fig. 3 in Verbindung mit Fig. 4 zeigt, sind die Eindrückungen 13 in Form von pyramidenförmigen Vertiefungen ausgebildet. Wie Fig. 3 zeigt, besitzen benachbarte Eindrückungen 13 einen Mittenabstand g. Im Ausführungsbeispiel ist der Mittenabstand g etwa so groß wie die Wandstärke e. Der Mittenabstand g kann vorteilhaft das 0,1fache bis 5fache der Wandstärke e betragen. Die Eindrückungen 13 besitzen eine Tiefe f, die kleiner als die Wandstärke e ist. Die Tiefe f beträgt vorteilhaft höchstens 70 %, insbesondere höchstens 50 %, bevorzugt höchstens 40 % der Wandstärke e. Durch eine vergleichsweise kleine Tiefe f der Eindrückungen 13 können diese einfach in einem Walzverfahren hergestellt werden. Der Mittenabstand g ist vorteilhaft größer als die Tiefe f der Eindrückungen. Vorteilhaft beträgt das Verhältnis des Mittenabstands benachbarter Eindrückungen zur Tiefe der Eindrückungen von 2 bis 6.

Wie Fig. 4 zeigt, besitzen die Eindrückungen 13 eine in Schienenlängsrichtung 6 gemessene Höhe h und eine senkrecht zur Schienenlängsrichtung 6 gemessene Breite i. Im Ausführungsbeispiel sind die Höhe h und die Breite i gleich groß. Unterschiedliche Maße für die Breite i und die Höhe h können jedoch vorteilhaft sind. Wie Fig. 4 auch zeigt, ist der Mittenabstand g in Schienenlängsrichtung 6 genauso groß wie der Mittenabstand g senkrecht zur Schienenlängsrichtung 6. Die Eindrückungen 13 sind demnach in Querrichtung und in Schienenlängsrichtung 6 der Befestigungsschiene 1 regelmäßig angeordnet. Wie Fig. 4 auch zeigt, besitzen benachbarte Eindrückungen 13 einen Abstand k zueinander. Der Abstand k ist vorteilhaft kleiner als die Wandstärke e der Befestigungsschiene 1 am Schienenrücken 2.

Anstatt der Eindrückungen 13 können auch andere Formen von Eindrückungen zur Bildung einer Profilierung 12 vorteilhaft sein. Die Profilierung 12 kann beispielsweise auch durch eine Rändelung oder eine andere Oberflächenstrukturierung gebildet sein. Die Profilierung 12 kann auch durch Erhöhungen wie beispielsweise Noppen oder dgl. gebildet sein. Vorteilhaft beträgt die Höhe der Erhöhungen weniger als 70%, insbesondere weniger als 50%, vorteilhaft weniger als 40% der Wandstärke e. Es kann auch vorgesehen sein, dass die Profilierung 12 durch eine erhöhte Rauheit der Oberfläche der Befestigungsschiene 1 erreicht wird. Wird die Profilierung 12 durch eine erhöhte Rauheit der Außenseite 7 des Schienenrückens 2 und der Außenseite 8 der Schienenlängsseiten 3 gebildet, so entspricht die gemittelte Rautiefe vorteilhaft den für die Tiefe f der Eindrückungen 13 angegebenen Werten.

Fig. 5 zeigt einen Blechzuschnitt 15, aus dem die Befestigungsschiene 1 gebildet werden kann. Der Blechzuschnitt 15 besitzt eine Längsrichtung 34, die nach der Umformung des Blechzuschnitts 15 zur Befestigungsschiene 1 parallel zur Schienenlängsrichtung 6 verläuft. Der Blechzuschnitt 15 besitzt einen Mittelbereich 16, der sich in Längsrichtung 34 erstreckt. Beidseitig des Mittelbereichs 16 sind Randbereiche 17 gebildet. Der Blechzuschnitt 15 besitzt eine Unterseite 18 und eine Oberseite 19. Die Bezeichnungen "Oberseite" und "Unterseite" beziehen sich auf die in Fig. 5 gezeigte Lage und sind völlig unabhängig von der Lage des Blechzuschnitts 15 im Herstellverfahren. Die Unterseite 18 bildet nach dem Umformen die Innenseite der Befestigungsschiene 1, und die Oberseite 19 bildet die Außenseite. Im Mittelbereich 16 weist der Blechzuschnitt 15 an der Oberseite 19 die Profilierung 12 auf. An der Unterseite 18 ist der Mittelbereich 16 eben und glatt ausgebildet. Die Randbereiche 17 weisen an der Unterseite 18 die zweite Profilierung 14 auf. An der Oberseite 19 sind die Randbereiche 17 glatt und eben ausgebildet.

Bei einem Verfahren zur Herstellung einer Befestigungsschiene 1 wird zunächst ein Blechzuschnitt 15, der beispielsweise auch als Bandmaterial vorliegen kann, mit den Profilierungen 12 und 14 versehen. Anschließend wird der Blechzuschnitt 15 umgeformt, insbesondere in einem Kaltwalzverfahren. Dabei wird der Mittelbereich 16 parallel zur Längsrichtung 34 zur Unterseite 18 hingebogen, um die Schienenlängsseiten 3 zu bilden. Der Blechzuschnitt 15 wird außerdem zwischen dem Mittelbereich 16 und den Randbereichen 17 umgebogen, um die Schienenlippen 4 zu bilden. Die Reihenfolge der Biegeschritte wird vorteilhaft geeignet gewählt.

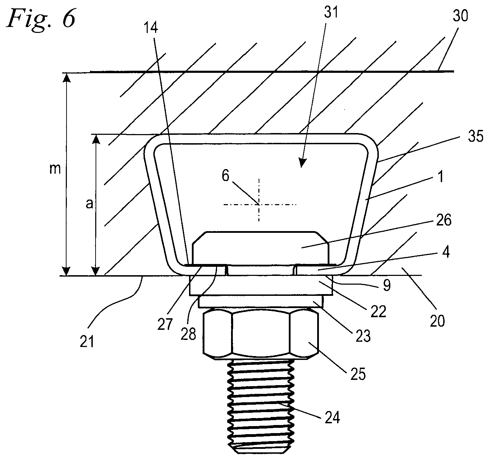

Fig. 6 zeigt die Befestigungsschiene 1 schematisch in einem Betonbauteil 20. Die Befestigungsschiene 1 ist in das Betonbauteil 20 eingebettet, nämlich in dieses einbetoniert. Wie Fig. 6 schematisch zeigt, besitzt das Betonbauteil 20 eine Bewehrung 30, die in beliebiger bekannter Weise ausgebildet sein kann. Die Bewehrung 30 besitzt zu einer Oberfläche 21 des Betonbauteils 20 einen Abstand m. Der Abstand m ist größer als die Höhe a der Befestigungsschiene 1. Die Höhe a und der Abstand m sind dabei senkrecht zur Oberfläche 21 gemessen. Dadurch reicht die Befestigungsschiene 1 mit keinem Bereich in die Bewehrung 30 hinein, so dass die Position der Befestigungsschiene 1 unabhängig von der Bewehrung 30 gewählt werden kann.

Die Außenseiten 9 der Schienenlippen 4 liegen bündig zur Oberfläche 21 des Betonbauteils 20. Die Außenfläche 35 steht in Kontakt mit dem umgebenden Beton des Betonbauteils 20. An der Befestigungsschiene 1 ist eine Befestigungsschraube 24 festgelegt. Die Befestigungsschraube 24 besitzt einen Kopf 26, der im Schienenraum 31 angeordnet ist. Der Kopf 26 besitzt eine Unterseite 27, die mit einer Profilierung 28 versehen ist. Die Profilierung 28 greift in die Profilierung 14 an der Innenseite der Schienenlippen 4 ein. Die Geometrie der Profilierung 28 ist vorteilhaft auf die Geometrie der Profilierung 14 abgestimmt. Die Profilierungen 14 und 28 können beispielsweise ineinandergreifende Verzahnungen sein. Der Kopf 26 ist durch die Profilierungen 14 und 28 vorteilhaft in Schienenlängsrichtung 6 formschlüssig an der Befestigungsschiene 1 gehalten. Dadurch können in Schienenlängsrichtung 6 hohe Kräfte übertragen werden.

An der Außenseite 9 der Schienenlippen 4 ist ein Bauteil 22 angeordnet, das an der Befestigungsschiene 1 bzw. am Betonbauteil 20 zu befestigen ist. Auf die Befestigungsschraube 24 ist eine Mutter 25 aufgeschraubt, die das Bauteil 22 gegen die Schienenlippen 4 drückt. Im Ausführungsbeispiel ist zwischen der Mutter 25 und dem Bauteil 22 eine Unterlegscheibe 23 angeordnet. Auch eine andere Anordnung und eine andere Gestaltung eines Befestigungselements können vorteilhaft sein.

Im Ausführungsbeispiel erstreckt sich die Profilierung 12 über die gesamte Außenfläche 35. Es kann in vorteilhafter alternativer Gestaltung vorgesehen sein, dass sich die Profilierung 12 nur über einen Teil der Außenfläche 35 erstreckt. Die Profilierung 12 ist in Schienenlängsrichtung 6 vorteilhaft durchgehend angeordnet. Die Profilierung erstreckt sich in vorteilhafter Gestaltung mindestens teilweise über die Außenseite 7 des Schienenrückens 2. Alternativ oder zusätzlich ist vorgesehen, dass die Profilierung sich mindestens teilweise über die Außenseite 8 mindestens einer, insbesondere über die Außenseiten 8 beider Schienenlängsseiten 3 erstreckt.

## Patentansprüche

1. Befestigungsschiene zur Einbettung in ein Betonbauteil, wobei die Befestigungsschiene (1) einen Schienenrücken (2), zwei einander gegenüberliegende, in einer Schienenlängsrichtung (6) verlaufende Schienenlängsseiten (3) und zwei Schienenlippen (4) besitzt, wobei die Schienenlippen (4) jeweils an der dem Schienenrücken (2) abgewandten Seite der Schienenlängsseiten (3) verlaufen und von den Schienenlängsseiten (3) aufeinander zu ragen und zwischen sich einen Schlitz (5) begrenzen, wobei die Schienenlippen (4) eine dem Schienenrücken (2) abgewandte Außenseite (9) besitzen, wobei die Befestigungsschiene (1) ankerlos ausgebildet ist und wobei die Befestigungsschiene (1) vom Schienenrücken (2) in Richtung auf die Außenseite (9) der Schienenlippen (4) mindestens einen Hinterschnitt bildet, wobei die Befestigungsschiene (1) eine Außenfläche (35) besitzt, die durch die den Schienenlippen (4) abgewandte Außenseite (7) des Schienenrückens (2) und die Außenseiten (8) der Schienenlängsseiten (3) gebildet ist und die zum Kontakt mit dem Beton des Betonbauteils vorgesehen ist, wobei der Hinterschnitt durch mindestens eine Schienenlängsseite (3) gebildet ist,
wobei
der Hinterschnitt dadurch gebildet ist, dass die parallel zur Außenseite (9) der Schienenlippen (4) und senkrecht zur Schienenlängsrichtung (6) gemessene Breite (b, c) der Befestigungsschiene (1) in zumindest einem Abschnitt (29) vom Schienenrücken (2) in Richtung auf die Außenseite (9) der Schienenlippen (4) abnimmt, **dadurch gekennzeichnet, dass** der Schienenrücken (2) an seiner Außenseite (7) mindestens teilweise mit einer Profilierung (12) versehen ist und die Schienenlängsseiten (3) zum Schienenrücken (2) um einen Winkel (α) geneigt sind, der von 70° bis 85° beträgt.

2. Befestigungsschiene nach Anspruch 1,
**dadurch gekennzeichnet, dass** die Tiefe (f) der Profilierung (12) höchstens 70% der Wandstärke (e) der Befestigungsschiene (1) beträgt.

3. Befestigungsschiene nach Anspruch 1 oder 2,
**dadurch gekennzeichnet, dass** die Profilierung (12) durch eine Vielzahl von Eindrückungen (13) in der Außenfläche (35) gebildet ist und dass die der Außenfläche (35) abgewandte Innenfläche (36) insbesondere als ebene Fläche ausgebildet ist.

4. Befestigungsschiene nach Anspruch 3,
**dadurch gekennzeichnet, dass** das Verhältnis des Mittenabstands (g) benachbarter Eindrückungen (13) zur Tiefe (f) der Eindrückungen (13) von 2 bis 6 beträgt.

5. Befestigungsschiene nach einem der Ansprüche 1 bis 4,
**dadurch gekennzeichnet, dass** die Profilierung (12) der Befestigungsschiene (1) sich durchgehend über die Außenseite (7) des Schienenrückens (2) und die Außenseiten (8) der Schienenlängsseiten (3) erstreckt.

6. Befestigungsschiene nach einem der Ansprüche 1 bis 5,
**dadurch gekennzeichnet, dass** die Befestigungsschiene (1) an den Innenseiten (10) der Schienenlippen (4) eine zweite Profilierung (14) trägt.

7. Befestigungsschiene nach Anspruch 6,
**dadurch gekennzeichnet, dass** die größte Breite (b) der Befestigungsschiene (1) in dem Abschnitt (29) mindestens das 1,1fache, insbesondere mindestens das 1,2fache der geringsten Breite (c) beträgt.

8. Befestigungsschiene nach einem de Ansprüche 1 bis 7,
**dadurch gekennzeichnet, dass** die Gesamtbreite (b) der Befestigungsschiene (1) das 1,4fache bis 1,8fache der Höhe (a) der Befestigungsschiene (1) beträgt.

9. Befestigungsschiene nach einem der Ansprüche 1 bis 8,
**dadurch gekennzeichnet, dass** die Befestigungsschiene (1) durch ein einteiliges gebogenes Blech gebildet ist.

10. Befestigungsschiene nach einem der Ansprüche 1 bis 9,
**dadurch gekennzeichnet, dass** die Wandstärke (e) der Befestigungsschiene (1) zumindest am Schienenrücken (2) von 1,2 mm bis 3,0 mm beträgt.

11. Befestigungsschiene nach einem der Ansprüche 1 bis 10,
**dadurch gekennzeichnet, dass** das Verhältnis der Wandstärke (e) der Befestigungsschiene (1) zur Gesamtbreite (b) der Befestigungsschiene (1) von 0,03 bis 0,08 beträgt.

12. Betonbauteil mit einer Befestigungsschiene nach einem der Ansprüche 1 bis 11, wobei die Befestigungsschiene (1) in das Betonbauteil (20) eingebettet ist und die Außenseite (9) der Schienenlippen (4) bündig zur Oberfläche (21) des Betonbauteils (20) liegt.

13. Betonbauteil nach Anspruch 12,
**dadurch gekennzeichnet, dass** das Betonbauteil (20) eine Bewehrung (30) aufweist, die zur Oberfläche (21) des Betonbauteils (20) einen Abstand (m) besitzt, der größer als die Höhe (a) der Befestigungsschiene (1) ist.

14. Verfahren zur Herstellung einer Befestigungsschiene nach einem der Ansprüche 1 bis 11 aus einem Blech, wobei das Verfahren die folgenden Schritte umfasst:
- Einbringung einer Profilierung (12) in zumindest einem Mittelbereich (16) einer Oberseite (19) des Blechs und
- Umformen des Blechs zur Bildung von Schienenrücken (2), Schienenlängseiten (3) und Schienenlippen (4) der Befestigungsschiene (1), wobei der Schienenrücken (2) mindestens teilweise durch den Mittelbereich (16) des Blechs gebildet wird.

15. Verfahren nach Anspruch 14,
**dadurch gekennzeichnet, dass** vor dem Umformen des Blechs eine zweite Profilierung (14) in Randbereichen (17) des Blechs an einer der Oberseite (19) abgewandten Unterseite (18) hergestellt wird.

## Claims

1. Fastening rail for embedding in a concrete component, wherein the fastening rail (1) has a rail back (2), two rail longitudinal sides (3), which are situated opposite to one another and extend in a rail longitudinal direction (6), and two rail lips (4), wherein the rail lips (4) respectively extend on that side of the rail longitudinal sides (3) that is remote from the rail back (2) and project towards one another from the rail longitudinal sides (3) and delimit a slot (5) between them, wherein the rail lips (4) have an outer side (9) which is remote from the rail back (2), wherein the fastening rail (1) has an anchorless form and wherein the fastening rail (1) forms at least one undercut from the rail back (2) in the direction of the outer side (9) of the rail lips (4), wherein the fastening rail (1) has an outer face (35) which is formed by the outer side (7), remote from the rail lips (4), of the rail back (2) and the outer sides (8) of the rail longitudinal sides (3) and which is provided for the purpose of contact with the concrete of the concrete component, wherein the undercut is formed by at least one rail longitudinal side (3), wherein the undercut is formed by virtue of the fact that the width (b, c) of the fastening rail (1), which width is measured parallel to the outer side (9) of the rail lips (4) and perpendicular to the rail longitudinal direction (6), decreases in at least one portion (29) from the rail back (2) in the direction of the outer side (9) of the rail lips (4),
**characterized in that** the rail back (2) is provided on its outer side (7) at least in part with a profiling (12) and the rail longitudinal sides (3) are inclined in relation to the rail back (2) by an angle (α) of from 70° to 85°.

2. Fastening rail according to Claim 1,
**characterized in that** the depth (f) of the profiling (12) is at most 70% of the wall thickness (e) of the fastening rail (1).

3. Fastening rail according to Claim 1 or 2,
**characterized in that** the profiling (12) is formed by a multiplicity of indentations (13) in the outer face (35) and **in that** the inner face (36), which is remote from the outer face (35), is in particular in the form of a planar face.

4. Fastening rail according to Claim 3,
**characterized in that** the ratio of the centre-to-centre distance (g) of adjacent indentations (13) to the depth (f) of the indentations (13) is from 2 to 6.

5. Fastening rail according to one of Claims 1 to 4,
**characterized in that** the profiling (12) of the fastening rail (1) extends continuously over the outer side (7) of the rail back (2) and the outer sides (8) of the rail longitudinal sides (3).

6. Fastening rail according to one of Claims 1 to 5,
**characterized in that** the fastening rail (1) bears a second profiling (14) on the inner sides (10) of the rail lips (4).

7. Fastening rail according to Claim 6,
**characterized in that** the largest width (b) of the fastening rail (1) in the portion (29) is at least 1.1 times, in particular at least 1.2 times, the smallest width (c).

8. Fastening rail according to one of Claims 1 to 7,
**characterized in that** the overall width (b) of the fastening rail (1) is from 1.4 times to 1.8 times the height (a) of the fastening rail (1).

9. Fastening rail according to one of Claims 1 to 8,
**characterized in that** the fastening rail (1) is formed by a unipartite bent metal sheet.

10. Fastening rail according to one of Claims 1 to 9,
**characterized in that** the wall thickness (e) of the fastening rail (1) at least on the rail back (2) is from 1.2 mm to 3.0 mm.

11. Fastening rail according to one of Claims 1 to 10,
**characterized in that** the ratio of the wall thickness (e) of the fastening rail (1) to the overall width (b) of the fastening rail (1) is from 0.03 to 0.08.

12. Concrete component having a fastening rail according to one of Claims 1 to 11, wherein the fastening rail (1) is embedded in the concrete component (20) and the outer side (9) of the rail lips (4) lies flush with the surface (21) of the concrete component (20).

13. Concrete component according to Claim 12,
**characterized in that** the concrete component (20) has a reinforcement (30) which is at a distance (m) from the surface (21) of the concrete component (20) that is larger than the height (a) of the fastening rail (1).

14. Method for producing a fastening rail according to one of Claims 1 to 11 from a metal sheet, wherein the method comprises the following steps:
- introducing a profiling (12) in at least a central region (16) of a top side (19) of the metal sheet and
- forming the metal sheet so as to form a rail back (2), rail longitudinal sides (3) and rail lips (4) of the fastening rail (1), wherein the rail back (2) is formed at least in part by the central region (16) of the metal sheet.

15. Method according to Claim 14,
**characterized in that**, before the metal sheet is formed, a second profiling (14) is produced in edge regions (17) of the metal sheet on a bottom side (18) which is remote from the top side

## Revendications

1. Rail de fixation destiné à être encastré dans un composant en béton, le rail de fixation (1) possédant un dos de rail (2), deux côtés longitudinaux de rail (3) opposés l'un à l'autre, s'étendant dans une direction longitudinale de rail (6) et deux lèvres de rail (4), les lèvres de rail (4) s'étendant chacune sur le côté des côtés longitudinaux de rail (3) détourné du dos de rail (2) et dépassant des côtés longitudinaux de rail (3) l'une vers l'autre et délimitant entre elles une fente (5), les lèvres de rail (4) possédant un côté extérieur (9) détourné du dos de rail (2), le rail de fixation (1) étant configuré sans ancrage et le rail de fixation (1) formant au moins une contre-dépouille à partir du dos de rail (2) en direction du côté extérieur (9) des lèvres de rail (4), le rail de fixation (1) possédant une surface extérieure (35), qui est formée par le côté extérieur (7) du dos de rail (2) détourné des lèvres de rail (4) et les côtés extérieurs (8) des côtés longitudinaux de rail (3), et qui est prévue pour le contact avec le béton du composant en béton, la contre-dépouille étant formée par au moins un côté longitudinal de rail (3), la contre-dépouille étant formée par le fait que la largeur (b, c) du rail de fixation (1), mesurée parallèlement au côté extérieur (9) des lèvres de rail (4) et perpendiculairement à la direction longitudinale de rail (6), diminue dans au moins une section (29) du dos de rail (2) en direction du côté extérieur (9) des lèvres de rail (4),
**caractérisé en ce que** le dos de rail (2) est muni au moins partiellement d'un profilage (12) sur son côté extérieur (7) et les côtés longitudinaux de rail (3) sont inclinés par rapport au dos de rail (2) d'un angle (a), qui est de 70° à 85°.

2. Rail de fixation selon la revendication 1,
**caractérisé en ce que** la profondeur (f) du profilage (12) est d'au plus 70 % de l'épaisseur de paroi (e) du rail de fixation (1).

3. Rail de fixation selon la revendication 1 ou 2,
**caractérisé en ce que** le profilage (12) est formé par une pluralité de renfoncements (13) dans la surface extérieure (35) et **en ce que** la surface intérieure (36) détournée de la surface extérieure (35) est notamment configurée sous forme de surface plane.

4. Rail de fixation selon la revendication 3,
**caractérisé en ce que** le rapport entre la distance au centre (g) de renfoncements voisins (13) et la profondeur (f) des renfoncements (13) est de 2 à 6.

5. Rail de fixation selon l'une quelconque des revendications 1 à 4, **caractérisé en ce que** le profilage (12) du rail de fixation (1) s'étend de manière continue sur le côté extérieur (7) du dos de rail (2) et les côtés extérieurs (8) des côtés longitudinaux de rail (3).

6. Rail de fixation selon l'une quelconque des revendications 1 à 5, **caractérisé en ce que** le rail de fixation (1) porte un deuxième profilage (14) sur les côtés intérieurs (10) des lèvres de rail (4).

7. Rail de fixation selon la revendication 6,
**caractérisé en ce que** la largeur maximale (b) du rail de fixation (1) dans la section (29) est d'au moins 1,1 fois, notamment d'au moins 1,2 fois, la largeur minimale (c).

8. Rail de fixation selon l'une quelconque des revendications 1 à 7,
**caractérisé en ce que** la largeur totale (b) du rail de fixation (1) est de 1,4 fois à 1,8 fois la hauteur (a) du rail de fixation (1).

9. Rail de fixation selon l'une quelconque des revendications 1 à 8,
**caractérisé en ce que** le rail de fixation (1) est formé par une tôle pliée en une seule pièce.

10. Rail de fixation selon l'une quelconque des revendications 1 à 9,
**caractérisé en ce que** l'épaisseur de paroi (e) du rail de fixation (1) est de 1,2 mm à 3,0 mm, au moins au niveau du dos de rail (2).

11. Rail de fixation selon l'une quelconque des revendications 1 à 10,
**caractérisé en ce que** le rapport entre l'épaisseur de paroi (e) du rail de fixation (1) et la largeur totale (b) du rail de fixation (1) est de 0,03 à 0,08.

12. Composant en béton comprenant un rail de fixation selon l'une quelconque des revendications 1 à 11, le rail de fixation (1) étant encastré dans le composant en béton (20) et le côté extérieur (9) des lèvres de rail (4) étant situé en alignement avec la surface (21) du composant en béton (20).

13. Composant en béton selon la revendication 12,
**caractérisé en ce que** le composant en béton (20) présente une armature (30), qui se trouve à une distance (m) de la surface (21) du composant en béton (20) qui est supérieure à la hauteur (a) du rail de fixation (1).

14. Procédé de fabrication d'un rail de fixation selon l'une quelconque des revendications 1 à 11 à partir d'une tôle, le procédé comprenant les étapes suivantes :
- la réalisation d'un profilage (12) dans au moins une zone centrale (16) d'un côté supérieur (19) de la tôle et
- la déformation de la tôle pour former le dos de rail (2), les côtés longitudinaux de rail (3) et les lèvres de rail (4) du rail de fixation (1), le dos de rail (2) étant formé au moins partiellement par la zone centrale (16) de la tôle.

15. Procédé selon la revendication 14,
**caractérisé en ce qu'**avant la déformation de la tôle, un deuxième profilage (14) est fabriqué dans des zones de bord (17) de la tôle sur un côté inférieur (18) détourné du côté supérieur (19).
